# EUROPÄISCHE PATENTANMELDUNG

(11) **EP 1 246 297 A1**
(43) Veröffentlichungstag der Anmeldung: **02.10.2002**
(21) Anmeldenummer: 01108172.6
(22) Anmeldetag: 30.03.2001
(51) Int. Cl.: H01Q 3/46, H01Q 7/00, G01N 22/00

(54) **Verfahren zur Identifikation eines Systemzustandes eines technischen Systems mit einer Sensoreinrichtung mit einem passiven Bauelement sowie Sensoreinrichtung für ein derartiges Verfahren**

(71) Anmelder: SIEMENS AKTIENGESELLSCHAFT, 80333 München (DE)
(72) Erfinder: Pohl, Alfred, Dr., 2130 Mistelbach (AT)

(57) **Zusammenfassung**

Die Erfindung betrifft ein Verfahren zur Identifikation eines Systemzustandes eines technischen Systems durch eine Sensoreinrichtung mit einem Antennenelement zum Empfang und zur Sendung von Funksignalen zur Abfrage und Mitteilung des Systemzustandes, wobei das Sendeverhalten des Antennenelements durch Steuerung mindestens einer Lastimpedanz des Antennenelements bestimmt wird, wobei die Lastimpedanz des Antennenelements durch ein physikalisches Signal gesteuert wird. Ferner betrifft die Erfindung eine Sensoreinrichtung für ein derartiges Verfahren.

## Beschreibung

Verfahren zur Identifikation eines Systemzustandes eines technischen Systems mit einer Sensoreinrichtung mit einem passiven Bauelement sowie Sensoreinrichtung und Verwendung einer Sensoreinrichtung.

Die Erfindung betrifft ein Verfahren zur Identifikation eines Systemzustandes eines technischen Systems mit den Merkmalen des Oberbegriffs des Patentanspruchs 1. Ferner betrifft die Erfindung eine Sensoreinrichtung mit einem Antennenelement mit den Merkmalen des Oberbegriffs des Patentanspruchs 13 sowie die Verwendung einer Sensoreinrichtung.

Als Stand der Technik sind Funkidentifikationssysteme bekannt, bei denen ein gesendetes Funksignal von einer Empfangsantenne reflektiert wird, wobei die Lastimpedanz der Empfangsantenne über aktive Bauelemente beeinflusst wird, wodurch das von der Empfangsantenne reflektierte Funksignal gegenüber dem gesendeten Funksignal moduliert wird. Die aktiven Bauelemente der Lastimpedanz der Empfangsantenne werden dabei über eine Steuerschaltung mit Stromversorgung entsprechend angesteuert.

Der Erfindung liegt die Aufgabe zugrunde, ein Verfahren zur Identifikation eines Systemzustandes eines technischen Systems anzubieten, welches konstruktiv einfach aufgebaut ist und keine Stromversorgung benötigt. Ferner soll eine Sensoreinrichtung mit einem Antennenelement sowie eine Verwendung einer Sensoreinrichtung angeboten werden.

Die Erfindung wird für das Verfahren durch die Merkmale des kennzeichnenden Teils des Patentanspruchs 1 in Verbindung mit den Merkmalen des Oberbegriffs gelöst. Vorteilhafte Ausführungsformen des Verfahrens werden in den Unteransprüchen 2-12 beschrieben. Für die Sensoreinrichtung wird die Aufgabe durch die Merkmale des kennzeichnenden Teils des Patentanspruchs 13 in Verbindung mit den Merkmalen des Oberbegriffs des Patentanspruchs 13 gelöst. Vorteilhafte Ausführungsformen der Sensoreinrichtung werden in den Unteransprüchen 14 - 22 beschrieben. Die Verwendung der Sensoreinrichtung gemäß den Ansprüchen 13 - 22 ist in Anspruch 23 beschrieben.

Beim erfindungsgemäßen Verfahren wird die Lastimpedanz des reflektierenden Antennenelements durch ein zusätzliches physikalisches Signal gesteuert, wodurch das Sendeverhalten (Reflektionsverhalten) des reflektierenden Antennenelements gesteuert wird. Somit werden vom auswertenden Antennenelement gesendete Funksignale abhängig von der Art der Steuerung der Lastimpedanz durch das physikalische Signal entsprechend unterschiedlich moduliert und vom reflektierenden Antennenelement an das auswertende Antennenelement zur Auswertung zurückgesendet.

Beim erfindungsgemäßen Verfahren ist für das reflektierende Antennenelement sowie dessen Lastimpedanz keine separate Stromversorgung erforderlich, wodurch die Einsatzmöglichkeiten des erfindungsgemäßen Verfahrens verbessert werden. In einer vorteilhaften Verfahrensvariante wird vom reflektierenden Antennenelement mindestens ein und insbesondere zwei monofrequente und hochfrequente Funksignale vom auswertenden Antennenelement empfangen, welches vom reflektierenden Antennenelement moduliert, und zwar insbesondere mit einem Hauptbandbereich und einem oder mehreren Seitenbandbereichen an das auswertende Antennenelement zurückgesendet wird. Bei zwei empfangenen Funksignalen sind mehrere Seitenbandbereiche in größeren Abständen zur besseren Auswertung vorhanden. Durch Auswertung des vom reflektierenden Antennenelement zurückgesendeten Funksignals in einer Auswerteeinheit des auswertenden Antennenelements können Rückschlüsse auf die Steuerung der Lastimpedanz des reflektierenden Antennenelements durch das physikalische Signal sowie auf dessen Signalgrößen oder weitere Steuer- oder Einflussgrößen gezogen werden.

Wenn das zusätzliche physikalische Signal vor dem Erreichen des reflektierenden Antennenelements in eine Wechselwirkung mit einem technischen System eintritt und hierdurch eine Veränderung erfährt, können bei Kenntnis der Signalgrößen des physikalischen Signals beim Absenden im Zusammenhang mit dem vom reflektierenden Antennenelement zurückgesendeten Funksignal Rückschlüsse über die Art der Wechselwirkung mit dem technischen System geschlossen werden. Hierdurch können Systemzustände des technischen Systems bestimmt werden. Insgesamt ist der Begriff "technisches System" allgemein zu verstehen und kann ein zu überprüfendes oder detektierendes Bauteil, einen Fertigungsgegenstand, ein Prüfobjekt oder allgemein einen Warengegenstand betreffen.

Das physikalische Signal kann von einem Sender übertragen werden, der mit einer Auswerteeinheit des auswertenden Antennenelements verbunden ist. Damit sind in der Auswerteeinheit sowohl die Signaldaten des gesendeten und zurückempfangenen (modulierten) Funksignals sowie die Signalgrößen des physikalischen Signals bei Absendung vorhanden und können gemeinsam ausgewertet werden.

In einer Verfahrensvariante kann das physikalische Signal ein Lichtsignal sein, wodurch bei Wechselwirkung mit einem in den Übertragungsweg des physikalischen Signals eingebrachten technischen Systems z.B. die Lichtdurchlässigkeit oder das Reflektionsverhalten des technischen Systems ermittelt werden kann. Bei Wechselwirkung des Lichtsignals mit dem technischen System tritt eine Änderung insbesondere der Amplitude, Frequenz und/oder der Phase des Lichtsignals auf, wodurch die Lastimpedanz des reflektierenden Antennenelements entsprechend gesteuert wird. Durch ein Lichtsignal als physikalisches Signal kann z.B. festgestellt werden, ob eine hergestellte Glasscheibe mit einer gleichbleibenden Beschichtung versehen ist.

In einer weiteren Verfahrensvariante kann das physikalische Signal ein magnetisches Signal sein, wodurch in Wechselwirkung mit dem jeweiligen technischen System insbesondere dessen magnetische Eigenschaften (z.B. Grad der Magnetisierung) festgestellt werden können. Über ein magnetisches Signal kann z.B. festgestellt werden, ob das technische System magnetische Materialien aufweist.

In einer weiteren Verfahrensvariante kann das physikalische Signal ein Kraftsignal sein. Dieses kann durch eine dynamische Belastung des technischen Systems entstehen und somit Rückschlüsse auf das Belastungsverhalten des technischen Systems zulassen. Durch ein Kraftsignal können z.B. Reaktionsgrößen eines Autoreifens als technisches System bei Bremsoder Beschleunigungsversuchen ermittelt werden.

Das erfindungsgemäße Verfahren kann auch mit mehreren (und unterschiedlichen) physikalischen Signalen betrieben werden, wodurch eine Vielzahl von Systemzuständen eines technischen Systems ermittelt werden kann. So können parallel z.B. ein Lichtsignal und ein magnetisches Signal als physikalische Signale zur Wechselwirkung mit dem jeweiligen technischen System und zur Steuerung der Lastimpedanz des reflektierenden Antennenelements verwendet werden.

Die Ausgangssignale der Lastimpedanz des reflektierenden Antennenelements können diesem direkt oder über eine Wandlereinrichtung zur Umwandlung eines Ausgangswertes der Lastimpedanz in eine Impedanz oder eine Spannung zur Steuerung einer Impedanz zugeführt werden.

Die erfindungsgemäße Sensoreinrichtung mit einem Antennenelement zum Empfang und zur Sendung von Funksignalen zur Abfrage und Mitteilung eines Systemzustandes eines technischen Systems besitzt als Lastimpedanz des reflektierenden Antennenelements ein durch ein physikalisches Signal gesteuertes passives Bauelement, für welches keine separate Stromversorgung benötigt wird.

In Abhängigkeit von der Art des physikalischen Signals kann das passive Bauelement als lichtempfindliche Impedanz, z.B. als LDR-Element (light-dependant-resistor) oder Fototransistor ausgebildet sein. Ein als magnetempfindliches Element ausgebildetes passives Bauelement kann als GMI-(giant-magneto-impedance) oder GMR-Element (giant-magneto-resistor) ausgebildet sein. Wenn das passive Bauelement ein kraftempfindliches Element ist, kann dieses z.B. als Piezo-Element oder als Druckdose ausgeführt sein, dessen Ausgangswerte von den einwirkenden Belastungskräften abhängen. Als kraftempfindliches Element kann auch ein Plattenkondensator verwendet werden, dessen Plattenabstand durch eine Belastungskraft verändert wird.

Das physikalische Signal kann auch ein Schallsignal sein, als kraft- bzw. schalldruckempfindliches Bauelement kann dann z.B. ein Kondensatormikrofon dienen.

In einer weiteren Ausführungsform der Sensoreinrichtung können mehrere passive Bauelemente als Lastimpedanzen des reflektierenden Antennenelements vorgesehen sein, wodurch unterschiedliche physikalische Signale, also z.B. ein Lichtsignal und ein magnetempfindliches Signal, empfangen werden können.

Die Ausgangsgrößen des/der passiven Bauelemente(s) können direkt oder über eine Wandlereinrichtung mit dem reflektierenden Antennenelement zur Steuerung dessen Reflektionsverhaltens verbunden werden. Derartige Wandlereinrichtungen können z.B. als Feldeffekttransistor (FET) oder Kapazitätsdiode ausgeführt sein, die durch die Ausgangsspannung des Piezo-Elements gesteuert werden.

Die Erfindung ist anhand von Ausführungsbeispielen in den Zeichnungsfiguren näher erläutert. Es zeigen:
- FIG 1: eine schematische Darstellung eines Signalaus tausches zwischen einem auswertenden und einem reflektierenden Antennenelement sowie
- FIG 2: eine schematische Darstellung eines Frequenz spektrums eines Sendesignals sowie eines modu lierten reflektierten Signals.

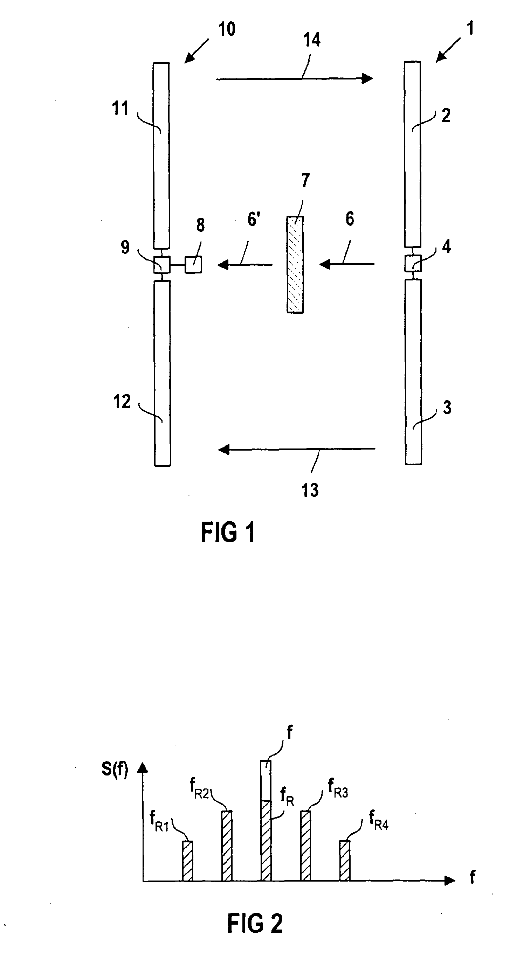

FIG 1 zeigt ein auswertendes Antennenelement 1 mit Strahlerhälften 2, 3 sowie eine Auswerteeinheit 4. Ferner ist ein reflektierendes Antennenelement 10 mit Strahlerhälften 11, 12 dargestellt, welche über eine Wandlereinrichtung 9 mit einer Lastimpedanz 8 als Fußpunktwiderstand des Antennenelements 10 verbunden sind. Vom auswertenden Antennenelement 1 gesendete Funksignale 13 werden in Abhängigkeit von einer Steuerung (Veränderung) der Lastimpedanz 8 durch das sich daraus ergebende Reflektionsverhalten des reflektierenden Antennenelements 10 über entsprechend modulierte reflektierte Funksignale 14 zur Auswertung im Antennenelement 1 in dessen Auswerteeinheit 4 reflektiert.

Die Lastimpedanz 8 des reflektierenden Antennenelements 10 ist z.B. als licht-, magnet- oder kraftempfindliches Element ausgebildet, so dass die Lastimpedanz 8 durch mindestens ein physikalisches Signal 6, z.B. ein Lichtsignal, magnetisches Signal und/oder Kraftsignal verändert wird. Die Lastimpedanz 8 kann auch z.B. als Piezo-Element in das technische System 7 integriert sein, so dass bei einer Verformung des technischen Systems 7 (durch ein Kraftsignal) eine Veränderung der Lastimpedanz 8 auftritt (nicht abgebildet).

Ein physikalisches Signal 6 tritt vor dem Erreichen der Lastimpedanz 8 mit einem technischen System 7 in Wechselwirkung. Wenn das technische System 7 z.B. eine Glasscheibe ist, kann ein Lichtsignal als physikalisches Signal 6 das technische System 7 durchdringen und dabei seine Signaleigenschaften, z.B. seine Amplitude verändern. Das nach Durchführung der Wechselwirkung mit dem technischen System 7 entsprechend in seinen Signaleigenschaften veränderte Signal 6 erreicht nun die Lastimpedanz 8 und verändert diese, so dass z.B. laufend vom auswertenden Antennenelement 1 ausgesendete Funksignale durch ein aufgrund der veränderten Lastimpedanz 8 geändertes Reflektionsverhalten des reflektierenden Antennenelements 10 in entsprechend geänderte und modulierte rückgesendete (reflektierte) Funksignale 14 von dem reflektierenden Antennenelement 10 an das auswertende Antennenelement 1 zurückgesendet werden.

Bei einer laufenden Sendung von insbesondere monofrequenten und hochfrequenten Funksignalen 13 vom auswertenden Antennenelement 1 zur Reflektion vom reflektierenden Antennenelement 10 können räumlich oder zeitlich begrenzte gezielte Triggersignale des physikalischen Signals 6 verwendet werden, um eine zeitlich begrenzte Veränderung der Lastimpedanz 8 aufgrund einer Wechselwirkung des Signals 6 mit dem technischen System 7 zu erreichen, so dass über entsprechend geändert modulierte rückgesendete Funksignale 14 vom reflektierenden Antennenelement 10 an das auswertende Antennenelement 1 in der Auswerteeinheit 4 Rückschlüsse auf bestimmte Eigenschaften des technischen Systems 7 gezogen werden können.

Zur Vermeidung einer Störung von benachbarten Identifikationssystemen kann das Signal 6 unkorrelierte Signalfolgen (Triggerfolgen und/oder unterschiedliche Triggerfrequenzen) und/oder einen Signalcode besitzen. Durch gezieltes Absetzen von Signalen 6 (Triggersignalen) z.B. über einen nicht abgebildeten Sender kann eine Ein-Bit-Identifikation eines Systemzustandes des technischen Systems 7 stattfinden.

Die Ausgangsgrößen der Lastimpedanz 8 können direkt mit den Strahlerhälften 11, 12 des reflektierenden Antennenelements 10 (nicht abgebildet) oder - wie in FIG 1 abgebildet - über eine Wandlereinrichtung 9 mit den Strahlerhälften 11, 12 verbunden sein. Die Wandlereinrichtung 9 kann eine Ausgangsgröße der Lastimpedanz 8 in eine Impedanz oder eine Spannung wandeln, so dass durch Zusammenschaltung der Lastimpedanz 8 und der Wandlereinrichtung 9 ein passiver, drahtlos auszulesender Sensor für physikalische oder chemische Messgrößen der Systemzustände des technischen Systems 7 entsteht.

FIG 2 zeigt eine Frequenzdarstellung (Leistungsdichte s(f) über der Frequenz f) eines von einem auswertenden Antennenelement 1 gesendeten Funksignals 13 (vgl. FIG 1) mit einer Frequenz f. Das vom reflektierenden Antennenelement 10 reflektierte Funksignal 14 besitzt eine Reflektionsfrequenz f_{R}, welche im wesentlichen der Sendefrequenz F entspricht. Ferner sind in Seitenbändern des reflektierten Funksignals 14 weitere Reflektionsfrequenzen f_{R1} bis f_{R4} abgebildet. Während das gesendete Funksignal 13 des auswertenden Antennenelements 1 sich somit in einem engen Hauptbandbereich befindet, besitzt das reflektierte Funksignal 14 des reflektierten Antennenelements 10 auch Frequenzanteile f_{R1} - f_{R4} in Seitenbandbereichen, so dass keine oder nur sehr geringe Störung des reflektierten Funksignals 14 durch das gesendete Funksignal 13 auftritt. Durch Auswertung der Frequenzanteile f_{R1} - f_{R4} in den Seitenbändern des reflektierten Funksignals 14 in der Auswerteeinheit 4 des auswertenden Antennenelements 1 können Rückschlüsse auf eine Veränderung der Signaleigenschaften des Signals 6 bei Wechselwirkung mit dem technischen System 7 und somit Rückschlüsse auf Systemeigenschaften des technischen Systems 7 gezogen werden.

## Patentansprüche

1. Verfahren zur Identifikation eines Systemzustandes eines technischen Systems durch eine Sensoreinrichtung mit einem Antennenelement zum Empfang und zur Sendung von Funksignalen zur Abfrage und Mitteilung des Systemzustandes, wobei das Sendeverhalten des Antennenelements durch Steuerung mindestens einer Lastimpedanz des Antennenelements bestimmt wird,
**dadurch gekennzeichnet,dass** die Lastimpedanz des Antennenelements durch ein physikalisches Signal gesteuert wird.

2. Verfahren nach Anspruch 1,
**dadurch gekennzeichnet,dass** über das Antennenelement ein hochfrequentes Funksignal empfangen wird.

3. Verfahren nach Anspruch 1 oder 2,
**dadurch gekennzeichnet,dass** über das Antennenelement ein monofrequentes Funksignal empfangen wird.

4. Verfahren nach einem der vorhergehenden Ansprüche,
**dadurch gekennzeichnet,dass** vom Antennenelement ein monofrequentes Funksignal empfangen und ein Funksignal mit einem Hauptbandbereich und mehreren Seitenbandbereichen gesendet wird.

5. Verfahren nach einem der vorhergehenden Ansprüche,
**dadurch gekennzeichnet,dass** das physikalische Signal auf dem Übertragungsweg eine Veränderung der Signaleigenschaften erfährt.

6. Verfahren nach einem der vorhergehenden Ansprüche,
**dadurch gekennzeichnet,daß** als physikalisches Signal ein Lichtsignal übertragen wird.

7. Verfahren nach Anspruch 6,
**dadurch gekennzeichnet, dass** die Amplitude, Frequenz und/oder die Phase des Lichtsignal verändert werden.

8. Verfahren nach einem der vorhergehenden Ansprüche,
**dadurchgekennzeichnet**,dass als physikalisches Signal ein magnetisches Signal übertragen wird.

9. Verfahren nach Anspruch 8,
**dadurch gekennzeichnet,dass** die Amplitude, Frequenz und/oder die Phase des magnetischen Signals verändert wird.

10. Verfahren nach einem der vorhergehenden Ansprüche,
**dadurch gekennzeichnet,dass** als physikalisches Signal ein Kraftsignal übertragen wird.

11. Verfahren nach Anspruch 10,
**dadurch gekennzeichnet,dass** die Amplitude, Frequenz und/oder die Phase des Kraftsignals verändert werden.

12. Verfahren nach einem der vorhergehenden Ansprüche,
**dadurch gekennzeichnet,dass** das Ausgangssignal der Lastimpedanz durch eine Wandlereinrichtung dem Antennenelement zugeführt wird.

13. Sensoreinrichtung mit einem Antennenelement zum Empfang und zur Sendung von Funksignalen, wobei das Sendeverhalten des Antennenelements durch Steuerung mindestens einer Lastimpedanz des Antennenelements bestimmt wird,
**dadurch gekennzeichnet,dass** die Lastimpedanz (8) als durch ein physikalisches Signal gesteuertes passives Bauelement ausgebildet ist.

14. Sensoreinrichtung nach Anspruch 13,
**dadurch gekennzeichnet,dass** die Lastimpedanz (8) als lichtempfindliches Element ausgebildet ist.

15. Sensoreinrichtung nach Anspruch 14,
**dadurch gekennzeichnet,dass** das lichtempfindliche Element als LDR-Element oder Phototransistor ausgebildet ist.

16. Sensoreinrichtung nach einem der Ansprüche 13 - 15,
**dadurch gekennzeichnet,dass** die Lastimpedanz (8) als magnetempfindliches Element ausgebildet ist.

17. Sensoreinrichtung nach Anspruch 16,
**dadurch gekennzeichnet,dass** das magnetempfindliche Element als GMI-Element oder GMR-Element ausgebildet ist.

18. Sensoreinrichtung nach einem der Ansprüche 13 - 17,
**dadurch gekennzeichnet,dass** die Lastimpedanz (8) als kraftempfindliches Element ausgebildet ist.

19. Sensoreinrichtung nach Anspruch 18,
**dadurch gekennzeichnet,dass** das kraftempfindliche Element als Piezo-Element ausgebildet ist.

20. Sensoreinrichtung nach einem der Ansprüche 13 - 19,
**dadurch gekennzeichnet,dass** eine Wandlereinrichtung (9) zur Übertragung der Ausgangssignale der Lastimpedanz (8) an das Antennenelement vorgesehen ist.

21. Sensoreinrichtung nach Anspruch 20,
**dadurch gekennzeichnet, dass** die Wandlereinrichtung (9) als Feldeffekttransistor ausgebildet ist.

22. Sensoreinrichtung nach Anspruch 20 oder 21,
**dadurchgekennzeichnet**,dass die Wandlereinrichtung (9) als Kapazitätsdiode ausgebildet ist.

23. Verwendung einer Sensoreinrichtung nach einem der Ansprüche 13 bis 22 zur Abfrage und Mitteilung eines Systemzustands eines technischen Systems.
